# EUROPÄISCHE PATENTSCHRIFT

(11) **EP 1 005 893 B1**
(45) Veröffentlichungstag und Bekanntmachung des Hinweises auf die Patenterteilung: **08.01.2003**
(21) Anmeldenummer: 99119799.7
(22) Anmeldetag: 06.10.1999
(51) Int. Cl.: B01D 46/52

(54) **Filterelement**
Filter element
Elément filtrant

(30) Priorität: 30.11.1998 DE 19855244
(43) Veröffentlichungstag der Anmeldung: 07.06.2000
(73) Patentinhaber: Carl Freudenberg KG, 69469 Weinheim (DE)
(72) Erfinder: Schöttmer, Dieter, Dr., 44269 Dortmund (DE)

(56) Entgegenhaltungen:
- WO-A-93/12858
- WO-A-94/01200
- DE-A- 4 343 814

## Beschreibung

### Technisches Gebiet

Die Erfindung betrifft ein Filterelement, umfassend einen Faltenpack aus Filterwerkstoff, der mit einem Halterahmen dichtend verbunden ist, wobei der Halterahmen stirnseitig zumindest einerseits ein Schwert aufweist, dessen Länge im wesentlichen der Länge der stirnseitigen Falte entspricht und das sich im wesentlichen parallel zur Richtung der stirnseitigen Faltenkante des Faltenpacks erstreckt und in der stirnseitigen Falte angeordnet ist.

### Stand der Technik

Ein solches Filterelement ist aus der EP 0 649 335 A1 bekannt. Die Längsseiten des Faltenpacks sind jeweils von einem Stabilisierungsstreifen dichtend überdeckt, wobei der Stabilisierungsstreifen auf der dem Halterahmen zugewandten Seite einen separat erzeugten Dichtstreifen aufweist, der unter elastischer Vorspannung dichtend an den Halterahmen anlegbar ist. Die Abdichtung zwischen dem Halterahmen und einem den Halterahmen umschließenden Filtergehäuse erfolgt durch eine weitere Abdichtung, die separat von der Abdichtung zwischen dem Faltenpack und dem Halterahmen ausgebildet ist.

Die DE-A-43.43.43.814 beschreibt ein Filterelement mit einem Faltenpack, der mit einem Halterahmen dichtend verbunden ist, wobei der Halterahmen ein Schwert aufweist, das in der stirnseitigen Faltenkante des Faltenpacks angeordnet ist. Der Halterahmen hat eine stirnseitig angeordnete Dichtung, die um ein filmschanierartig ausgebildetes Gelenk schwenkbar und an die stirnseitige Faltenwand dichtend anlegbar ist.

### Darstellung der Erfindung

Der Erfindung liegt die Aufgabe zugrunde, ein Filterelement der eingangs genannten Art derart weiterzuentwickeln, daß dieses einen teilearmen, einfachen Aufbau aufweist und dadurch in fertigungstechnischer und wirtschaftlicher Hinsicht einfach und kostengünstig herstellbar ist. Außerdem soll das Filterelement einfacher montierbar sein und bessere Gebrauchseigenschaften aufweisen.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß der Halterahmen eine stirnseitig angeordnete Doppeldichtlippe aufweist, die sich in Richtung der stirnseitigen Faltenkante sowie im wesentlichen parallel zum Schwert erstreckt und um ein filmschamierartig ausgebildetes Gelenk schwenkbar und mit der ersten Dichtlippe an die stirnseitige Faltenwand und mit der zweiten Dichtlippe an eine der Faltenwand zugewandte Begrenzungswand eines Filtergehäuses dichtend anlegbar ist. Durch die erfindungsgemäße Ausgestaltung des Filterelements wird eine wirkungsvolle Abdichtung der Stirnseite des Faltenpacks gegenüber dem Halterahmen erzielt. Die erste Dichtlippe drückt die stimseitige Faltenwand dichtend an die Oberfläche des Schwerts. Gleichzeitig wird durch die Doppeldichtlippe eine wirkungsvolle Abdichtung zwischen dem Halterahmen und dem Filtergehäuse gewährleistet, wobei es der Verwendung sekundärer Dichtmittel, beispielsweise Dichtungsschäumen nicht bedarf. Die Doppeldichtlippe ist unter elastischer Vorspannung dichtend zwischen der Begrenzungswand des Filtergehäuses und der am Schwert anliegenden Faltenwand eingeklemmt. Die Doppeldichtlippe ist bevorzugt einstückig und materialeinheitlich ausgebildet.

Gemäß einer vorteilhaften Ausgestaltung kann es vorgesehen sein, daß der Halterahmen aus einem polymeren Werkstoff besteht. Hierbei ist von Voretil, daß das gesamte Filterelement ein geringes Gewicht aufweist und korrosionsbeständig ist.

Auch die Doppeldichtlippe kann bevorzugt aus einem polymeren Werkstoff bestehen, wobei es gemäß einer vorteilhaften Ausgestaltung vorgesehen sein kann, daß der Halterahmen und die Doppeldichtlippe einstückig ineinander übergehend und materialeinheitlich ausgebildet sind. Als Werkstoffe sowohl für den Halterahmen als auch für die Doppeldichtlippe gelangen bevorzugt Polypropylen (PP) oder Polyethylen (PE) zur Anwendung, wobei die gewinkelt ausgebildete Doppeldichtlippe durch das filmscharnierartige Gelenk am Halterahmen befestigt ist. Durch eine derartige, einstückige Ausgestaltung ist die Handhabung des Filterelements, beispielsweise bei seiner Montage ins Filtergehäuse wesentlich vereinfacht.

Die elastische Befestigung der Doppeldichtlippe vereinfacht die Vormontage des Faltenpacks in den Halterahmen, sowie die Montage und Demontage der gesamten Filtereinheit.

Der Faltenpack und der Halterahmen bilden eine vormontierbare Einheit, wobei diese Einheit in das Filtergehäuse eingeschoben wird. Während der Montage der vormontierbaren Einheit in das Filtergehäuse legt sich die Doppeldichtlippe selbsttätig mit ihrer ersten Dichtlippe an die stirnseitige Faltenwand des Faltenpacks an und verpreßt diese dichtend mit dem Schwert. Außerdem legt sich die zweite Dichtlippe gleichzeitig unter elastischer Vorspannung dichtend an die dem Faltenpack zugewandte Begrenzungswand des Halterahmens dichtend an, so daß sich eine zuverlässige Abdichtung auch in diesem Bereichen ergibt.

Durch die Elastizität der Doppeldichtlippe können herstellungsbedingte Toleranzen des Faltenpacks und/oder des Halterahmens und/oder des Filtergehäuses ausgeglichen werden.

Durch die elastische Vorspannung der Doppeldichtlippe zwischen dem Faltenpack und dem Filtergehäuse sind Klappergeräusche des Filterelements bei seiner Verwendung ausgeschlossen.

Gemäß einer ersten Ausgestaltung kann die Doppeldichtlippe dachförmig gewinkelt ausgebildet sein, wobei die erste, an die Faltenwand anlegbare Dichtlippe durch das dem Gelenk abgewandte Ende und die zweite, an die Begrenzungswand anlegbare Dichtlippe durch einen Scheitel gebildet ist. Bei einer derartigen Ausgestaltung ist von Vorteil, daß die Doppeldichtlippe eine einfache geometrische Form aufweist und dadurch einfach herstellbar ist.

Gemäß einer zweiten, in funktionstechnischer Hnsicht vorteilhafteren Ausgestaltung besteht die Möglichkeit, daß die Doppeldichtlippe im Querschnitt betrachtet im wesentlichen Y-förmig ausgebildet ist und daß die beiden Dichtlippen jeweils durch die Enden der gabelförmigen Schenkel gebildet sind. Mit zunehmender Druckdifferenz zwischen der Anström- und der Abströmseite des Filterelements legen sich die beiden Dichtlippen verstärkt an die jeweils angrenzenden Flächen an, wobei sich der Anpreßdruck der Dichtlippen an die Dichtflächen im wesentlichen proportional zur Druckdifferenz verhält. Insbesondere bei vergleichsweise großen Druckdifferenzen von mehr als 500 Pa wird die zweite Ausgestaltung der Doppeldichtlippe der eingangs beschriebenen ersten Ausgestaltung der Doppeldichtlippe vorgezogen, um Leckagen möglichst auszuschließen.

Der Faltenpack besteht bevorzugt aus einem Vliesstoff und gelangt beispielsweise zur Luftfiltration als Autoinnenraumfilter zur Anwendung.

Für die meisten Anwendungsfälle ist von Vorteil, daß jeweils eine Doppeldichtlippe an jeder Stirnseite des Halterahmens angeordnet ist.

### Kurzbeschreibung der Zeichnungen

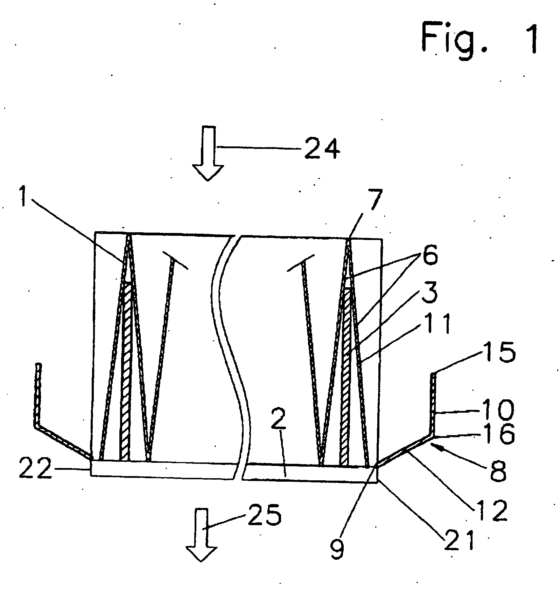

Zwei Ausführungsbeispiele eines erfindungsgemäßen Filterelements werden nachfolgend anhand der Figuren 1 bis 5 näher beschrieben. Es zeigen:

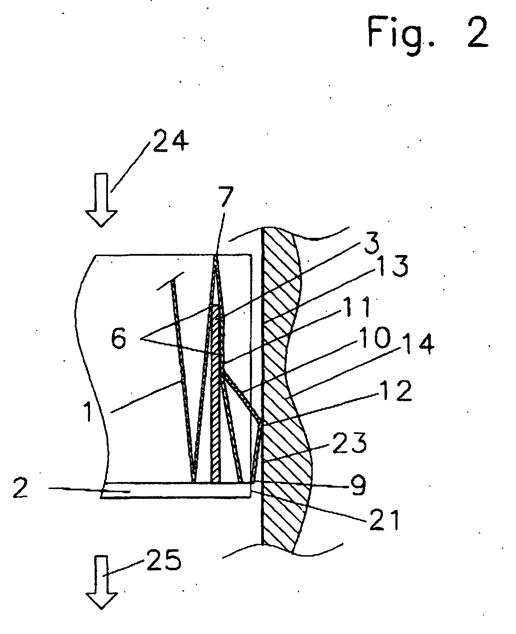

- Figuren 1 und 2: ein erstes Ausführungsbeispiel, wobei in Figur 1 die vormontierbare Einheit, bestehend aus Faltenpack und Halterahmen gezeigt ist und in Figur 2 die vormontierbare Einheit aus Figur 1, eingebaut in ein Filtergehäuse,

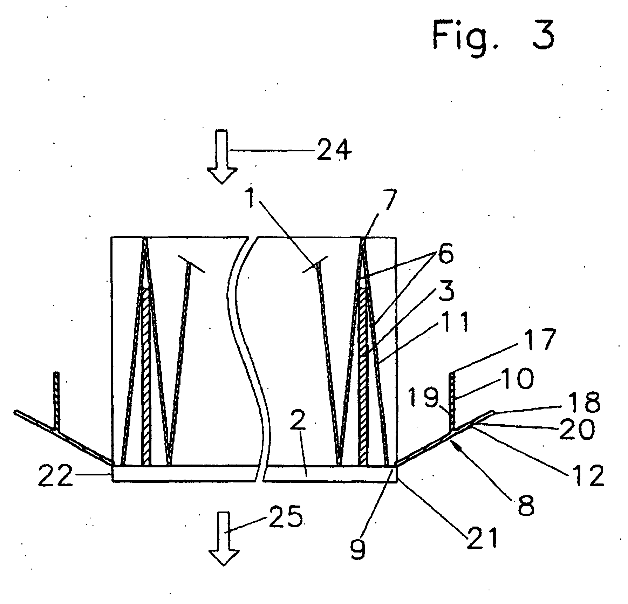

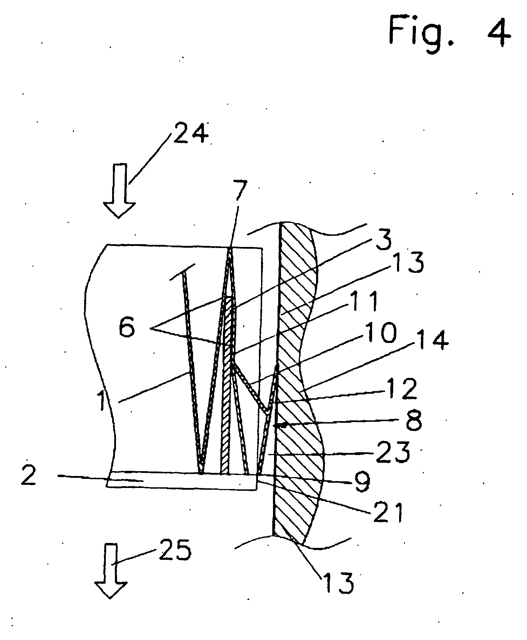

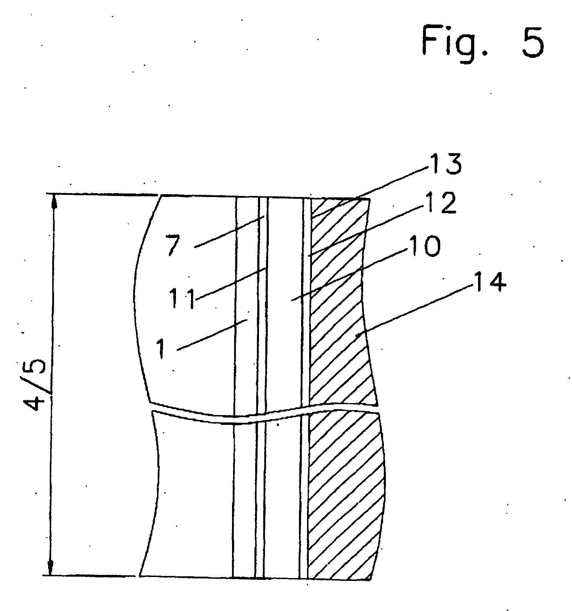

- Figuren 3 bis 5: ein zweites Ausführungsbeispiel, das sich vom ersten Ausführungsbeispiel gemäß der Figuren 1 und 2 durch eine anders gestaltete Doppeldichtlippe unterscheidet. In Figur 3 ist die vormontierbare Einheit, bestehend aus Faltenpack und Halterahmen gezeigt, in Figur 4 die vormontierbare Einheit aus Figur 3, eingebaut in ein Filtergehäuse. In Figur 5 ist ein Ausschnitt aus einer Draufsicht auf das Filterelement dargestellt.

### Ausführung der Erfindung

In jedem der beiden Ausführungsbeispiele gemäß der Figuren 1 bis 5 ist ein Filterelement gezeigt, das aus einem Faltenpack 1 und einem Halterahmen 2 besteht. Der Faltenpack 1 besteht in den gezeigten Ausführungsbeispielen aus einem Vliesstoff, der Halterahmen 2 ist demgegenüber aus Polypropylen gefertigt.

Der Halterahmen 2 weist in den gezeigten Ausführungsbeispielen stimseitig beiderseits jeweils ein Schwert 3 auf, die einen einstückigen und materialeinheitlichen Bestandteil des Halterahmens 2 bilden. Jedes Schwert 3 weist eine Länge 4 auf, die im wesentlichen der Länge 5 der jeweils stimseitigen Falte 6 entspricht. Die stimseitigen Falten 6 überdecken die stimseitig angeordneten Schwerter 3, die sich parallel zur Richtung der stimseitigen Faltenkanten 7 des Faltenpacks 1 erstrecken. Durch die Schwerter 3 werden die stimseitigen Falten 6 des Faltenpacks 1 einerseits stabilisiert. Andererseits wird durch die Anpressung der stirnseitigen Faltenwand 11 an das Schwert 3 durch die erste Dichtlippe 10 eine zuverlässige Abdichtung in diesem Bereich bewirkt.

Die Doppeldichtlippe 8 ist durch ein filmscharnierartig ausgebildetes Gelenk 9 einstückig ineinander übergehend und materialeinheitlich mit dem Halterahmen 2 ausgebildet. Davon abweichend besteht jedoch auch die Möglichkeit, die Doppeldichtlippe 8 aus einem vom Halterahmen 2 abweichenden Material zu fertigen.

Die Doppeldichtlippe 8 ist um das Gelenk 9 in Richtung der Faltenwand 11 schwenkbar und mit der ersten Dichtlippe 10 an die stimseitige Faltenwand 11 anlegbar. Die zweite Dichtlippe 12 ist dichtend an die der Faltenwand 11 zugewandte Begrenzungswand 13 des Filtergehäuses 14 dichtend anlegbar.

In Figur 1 ist eine vormontierbare Einheit, bestehend aus dem Faltenpack 1 und dem Halterahmen 2 im nicht-montierten Zustand gezeigt. Die Doppeldichtlippe 8 ist dachförmig gewinkelt ausgebildet, wobei die erste Dichtlippe 10 am vom Gelenk 9 abgewandten Ende 15 der Doppeldichtlippe 8 angeordnet ist. Die zweite Dichtlippe 12, die im eingebauten Zustand gemäß Figur 2 an die Begrenzungswand 13 anlegbar ist, wird durch den Scheitel 16 gebildet.

In Figur 2 ist die vormontierbare Einheit aus Figur 1 im eingebauten Zustand gezeigt. Es ist zu erkennen, daß die zweite Dichtlippe 12 an der Begrenzungswand 13 des Filtergehäuses 14 unter elastischer Vorspannung dichtend anliegt. Von entscheidender Bedeutung ist, daß - im Querschnitt betrachtet - die Fläche zwischen dem Gelenk 9 und der zweiten Dichtlippe 12 stets einen Spalt 23 begrenzen, der - ausgehend von der zweiten Dichtlippe 12 in Richtung des Gelenks 9 - einen sich erweiternden Querschnitt hat. Dadurch ist sichergestellt, daß die zweite Dichtlippe 12 die Begrenzungswand 13 stets einwandfrei anliegend berührt, auch wenn herstellungsbedingte Toleranzen des Faltenpacks 1 und/oder des Halterahmens 2 und/oder des Filtergehäuses 14 auszugleichen sind.

Das zweite Ausführungsbeispiel gemäß der Figuren 3 bis 5 unterscheidet sich von dem zuvor beschriebenen Ausführungsbeispiel durch die Geometrie der Doppeldichtlippe 8. Die Doppeldichtlippe 8 ist in diesem Ausführungsbeispiel -im Querschnitt betrachtet - im wesentlichen Y-förmig ausgebildet, wobei die beiden Dichtlippe 10, 12 jeweils durch die Enden 17, 18 der gabelförmigen Schenkel 19, 20 gebildet sind.

In Figur 3 ist die vormontierbare Einheit, bestehend aus dem Faltenpack 1 und dem Halterahmen 2 im nicht-eingebauten, herstellungsbedingten Zustand gezeigt.

In Figur 4 ist die vormontierbare Einheit aus Figur 3 in ein Filtergehäuse 14 eingebaut dargestellt. Die erste Dichtlippe 10 berührt die stirnseitige Faltenwand 11, die zweite Dichtlippe 12 die Begrenzungswand 13 des Filtergehäuses 14. Die beiden Dichtlippen 10,12 berühren die angrenzenden Flächen jeweils unter elastischer Vorspannung dichtend anliegend. Die stimseitige Faltenwand 11 wird durch den Anpreßdruck der ersten Dichtlippe 10 dichtend gegen das Schwert 3 gedrückt.

Durch die Y-förmige Ausgestaltung der Doppeldichtlippe 8 wird bewirkt, daß mit zunehmender Druckdifferenz zwischen der An- 24 und der Abströmseite 25 der Anpreßdruck der beiden Dichtlippen 10, 12 an die jeweils angrenzenden Flächen der Faltenwand 11 und der Begrenzungswand 13 ebenfalls zunimmt.

In Figur 5 ist eine Draufsicht auf das eingebaute Filterelement aus Figur 4 gezeigt. In der Draufsicht sind die beiden Dichtlippen 10, 12 zu erkennen, wobei sich die erste Dichtlippe 10 an der stirnseitigen Faltenwand 11 des Faltenpacks 1 und die zweite Dichtlippe 12 an der Begrenzungswand 13 des Filtergehäuses 14 abstützt.

## Patentansprüche

1. Filterelement, umfassend einen Faltenpack aus Filterwerkstoff, der mit einem Halterahmen dichtend verbunden ist, wobei der Halterahmen stirnseitig zumindest einerseits ein Schwert aufweist, dessen Länge im wesentlichen der Länge der stimseitigen Falte entspricht und das sich im wesentlichen parallel zur Richtung der stimseitigen Faltenkante des Faltenpacks erstreckt und in der stirnseitigen Falte angeordnet ist, wobei der Halterahmen (2) eine stirnseitig angeordnete Doppeldichtlippe (8) aufweist, die sich in Richtung der stirnseitigen Faltenkante (7) sowie im wesentlichen parallel zum Schwert (3) erstreckt und um ein filmscharnierartig ausgebildetes Gelenk (9) schwenkbar und mit der ersten Dichtlippe (10) an die stirnseitige Faltenwand (11) und mit der zweiten Dichtlippe (12) an eine der Faltenwand (11) zugewandte Begrenzungswand (13) eines Filtergehäuses (14) dichtend anlegbar ist.

2. Filterelement nach Anspruch 1, **dadurch gekennzeichnet, daß** der Halterahmen (2) aus polymerem Werkstoff besteht.

3. Filterrahmen nach Anspruch 1, **dadurch gekennzeichnet, daß** die Doppeldichtlippe (8) aus polymerem Werkstoff besteht.

4. Filterelement nach einem der Ansprüche 1 bis 3, **dadurch gekennzeichnet, daß** der Halterahmen (2) und die Doppeldichtlippe (8) einstückig ineinander übergehend und materialeinheitlich ausgebildet sind.

5. Filterelement nach einem der Ansprüche 1 bis 4, **dadurch gekennzeichnet, daß** die Doppeldichtlippe (8) dachförmig gewinkelt ausgebildet ist, daß die erste, an die Faltenwand (11) anlegbare Dichtlippe (10) durch das dem Gelenk abgewandte Ende (15) und die zweite, an die Begrenzungswand (13) anlegbare Dichtlippe (12) durch einen Scheitel (16) gebildet ist.

6. Filterelement nach einem der Ansprüche 1 bis 4, **dadurch gekennzeichnet, daß** die Doppeldichtlippe (8) im Querschnitt betrachtet im wesentlichen Y-förmig ausgebildet ist und daß die beiden Dichtlippen (10, 12) jeweils durch die Enden (17, 18) der gabelförmigen Schenkel (19, 20) gebildet sind.

7. Filterelement nach einem der Ansprüche 1 bis 6, **dadurch gekennzeichnet, daß** der Faltenpack (1) aus einem Vliesstoff besteht.

8. Filterelement nach einem der Ansprüche 1 bis 7, **dadurch gekennzeichnet, daß** jeweils eine Doppeldichtlippe (8) an jeder Stirnseite (21, 22) des Halterahmens (2) angeordnet ist.

## Claims

1. A filter element, comprising a folded pack of filter material which is sealingly connected to a holding frame, the holding frame having on the end face, at least on one side, a strut, the length of which corresponds essentially to the length of the end-face fold and which extends essentially parallel to the direction of the end-face fold edge of the folded pack and is arranged in the end-face fold, the holding frame (2) having a double sealing lip (8) which is arranged on the end face and which extends in the direction of the end-face fold edge (7) and essentially parallel to the strut (3), is pivotable about a joint (9) designed in the manner of a film hinge and is capable of being brought to bear sealingly with a first sealing lip (10) onto the end-face fold wall (11) and with a second sealing lip (12) onto a boundary wall (13) of a filter housing (14), the said boundary wall facing the fold wall (11).

2. A filter element according to Claim 1, **characterized in that** the holding frame (2) consists of polymeric material.

3. A filter element according to Claim 1, **characterized in that** the double sealing lip (8) consists of polymeric material.

4. A filter element according to one of Claims 1 to 3, **characterized in that** the holding frame (2) and the double sealing lip (8) are produced so as to merge in one piece one into the other and in a materially integral manner.

5. A filter element according to one of Claims 1 to 4, **characterized in that** a double sealing lip (8) has a design angled in a roof-shaped manner, and **in that** the first sealing lip (10) capable of being brought to bear onto the fold wall (11) is formed by the end (15) facing away from the joint and the second sealing lip (12) capable of being brought to bear onto the boundary wall (13) is formed by a vertex (16).

6. A filter element according to one of Claims 1 to 4, **characterized in that** the double sealing lip (8) has an essentially Y-shaped design, as seen in cross section, and **in that** the two sealing lips (10, 12) are formed in each case by the ends (17, 18) of the fork-shaped legs (19, 20).

7. A filter element according to one of Claims 1 to 6, **characterized in that** the filter pack (1) consists of a non-woven.

8. A filter element according to one of Claims 1 to 7, **characterized in that** a double sealing lip (8) is arranged in each case on each face (21, 22) of the holding frame (2).

## Revendications

1. Elément filtrant, comprenant un paquet de plis formés d'un matériau filtrant relié de manière étanche à un cadre de maintien, le cadre de maintien étant pourvu, sur au moins un de ses côtés frontaux, d'une diagonale dont la longueur correspond essentiellement à la longueur du pli situé sur le côté frontal, qui s'étend de manière essentiellement parallèle à la direction de l'arête de pliage du paquet de plis située sur le côté frontal et qui est située dans le pli se trouvant sur le côté frontal, le cadre de maintien (2) étant pourvu d'une double lèvre d'étanchéité (8) située sur le côté frontal, qui s'étend dans la direction de l'arête de pliage (7) située sur le côté frontal, de manière essentiellement parallèle à la diagonale (3), et qui peut pivoter autour d'une articulation (9) exécutée à la manière d'une lame, ce qui permet de la mettre en contact étanche avec la première lèvre d'étanchéité (10), contre la paroi plissée (11) située sur le côté frontal et, avec la seconde lèvre d'étanchéité (12), contre une paroi de limitation (13) d'un boîtier de filtre (14) tournée vers la paroi plissée (11).

2. Elément filtrant selon la revendication 1, **caractérisé en ce que** le cadre de maintien (2) est formé d'une matière polymère.

3. Elément filtrant selon la revendication 1, **caractérisé en ce que** la double lèvre d'étanchéité (8) est formée d'une matière polymère.

4. Elément filtrant selon l'une quelconque des revendications 1 à 3, **caractérisé en ce que** le cadre de maintien (2) et la double lèvre d'étanchéité (8) sont exécutés dans un même matériau et de manière à se confondre:

5. Elément filtrant selon l'une quelconque des revendications 1 à 4, **caractérisé en ce que** la double lèvre d'étanchéité (8) est exécutée d'une manière coudée formant un toit, **en ce que** la première lèvre d'étanchéité (10), qui peut être placée contre la paroi plissée (11), est formée par l'extrémité (15) éloignée de l'articulation et la seconde lèvre d'étanchéité (12), qui peut être placée contre la paroi de limitation (13), est formée par un sommet (16).

6. Elément filtrant selon l'une quelconque des revendications 1 à 4, **caractérisé en ce que** la double lèvre d'étanchéité (8) est exécutée, si on considère sa section transversale, de manière à avoir essentiellement la forme d'un Y et **en ce que** les deux lèvres d'étanchéité (10, 12) sont formées, respectivement, par les extrémités (17, 18) des branches (19, 20) en forme de fourchette.

7. Elément filtrant selon l'une quelconque des revendications 1 à 6, **caractérisé en ce que** le paquet de plis (1) est formé d'un matériau non-tissé.

8. Elément filtrant selon l'une quelconque des revendications 1 à 7, **caractérisé en ce que** chaque côté frontal (21, 22) du cadre de maintien (2) est pourvu d'une double lèvre d'étanchéité (8) respective.
